# EUROPÄISCHE PATENTSCHRIFT

(11) **EP 3 113 907 B1**
(45) Veröffentlichungstag und Bekanntmachung des Hinweises auf die Patenterteilung: **20.03.2019**
(21) Anmeldenummer: 15701672.6
(22) Anmeldetag: 22.01.2015
(51) Int. Cl.: E04B 1/76, B60W 30/06, G05D 1/02, H01F 38/14, H02J 7/02, H02J 50/10

(54) **VERFAHREN UND SYSTEM ZUR DURCHFÜHRUNG EINES VERFAHRENS ZUR BESTIMMUNG EINES WERTES FÜR DEN VERSATZ DER SENKRECHTEN PROJEKTIONEN ZWEIER WICKLUNGEN**
METHOD AND SYSTEM FOR CARRYING OUT A METHOD FOR DETERMINING A VALUE FOR THE OFFSET OF THE PERPENDICULAR PROJECTIONS OF TWO WINDINGS
PROCÉDÉ ET SYSTÈME POUR LA MISE EN OEUVRE D'UN PROCÉDÉ POUR LA DÉTERMINATION D'UNE VALEUR POUR LE DÉCALAGE DES PROJECTIONS VERTICALES DE DEUX ENROULEMENTS

(30) Priorität: 07.03.2014 DE 102014003028
(43) Veröffentlichungstag der Anmeldung: 11.01.2017
(73) Patentinhaber: SEW-EURODRIVE GmbH & Co. KG, 76646 Bruchsal (DE)
(72) Erfinder: WANJECK, Andreas, 68753 Waghäusel (DE); WOLF, Harald, 76698 Ubstadt-Weiher (DE); HUA, Zhidong, 76646 Bruchsal (DE); KNAB, Christopher, 68789 St. Leon-Rot (DE); FABIAN, Dennis, 68789 St. Leon-Rot (DE)
(86) Internationale Anmeldenummer: PCT/EP2015/000109
(87) Internationale Veröffentlichungsnummer: WO 2015/131971

(56) Entgegenhaltungen:
- US-A1- 2010 201 204
- US-A1- 2010 225 271
- US-A1- 2010 295 506
- US-A1- 2011 204 845

## Beschreibung

Die Erfindung betrifft ein Verfahren und ein System zur Durchführung eines Verfahrens zur Bestimmung eines Wertes für den Versatz der senkrechten Projektionen zweier Wicklungen.

Es ist allgemein bekannt, dass ein Fahrzeug, dessen Energiespeicher an einer Ladestation beladen werden muss, möglichst präzise an eine optimale Parkposition gelangen muss.

Aus der US 2010 / 201204 A1 ist als nächstliegender Stand der Technik eine Abstandsbestimmung bei einem berührungslosen Energieübertragungssystem bekannt.

Aus der US 2011 / 204845 A1 ist ein System zur induktiven Übertragung elektrischer Leistung bekannt, bei dem ein Fahrzeug automatisch auf einen Ladeplatz eingeparkt wird.

Der Erfindung liegt daher die Aufgabe zugrunde, ein System zur Bestimmung eines Wertes für den Versatz zur optimalen Position weiterzubilden, um somit den Wert anzuzeigen oder einem Regler zur Verfügung zu stellen.

Erfindungsgemäß wird die Aufgabe bei dem Verfahren nach den in Anspruch 1 und bei dem System nach den Anspruch 4 angegebenen Merkmalen gelöst.

Wichtige Merkmale der Erfindung bei dem Verfahren sind, dass das Verfahren zur Bestimmung eines Wertes für den Versatz der senkrechten Projektionen zweier Wicklungen in eine Ebene, insbesondere die Verfahrebene eines am eine erste der beiden Wicklungen aufweisenden Boden verfahrbaren, eine zweite der beiden Wicklungen aufweisenden Fahrzeugs geeignet ausgeführt ist, **wobei** jede der Wicklungen jeweils eine erste und eine zweite Teilwicklung aufweist,
wobei die beiden Teilwicklungen derart überlappend angeordnet sind, dass bei Bestromung der ersten Teilwicklung einer der Wicklungen mit einem Wechselstrom keine induzierte Spannung an der zweiten Teilwicklung derselben Wicklung erfassbar ist,
wobei zur Bestimmung eines Wertes für Entfernung
- eine als Sender fungierende Wicklung mit einem Wechselstrom beaufschlagt wird, insbesondere beide Teilwicklungen der Wicklung mit demselben Wechselstrom beaufschlagt werden,
- die Phasendifferenz zwischen der in der ersten Teilwicklung der als Empfänger fungierenden, anderen Wicklung induzierte Spannung U1 und der in der zweiten Teilwicklung der als Empfänger fungierenden Wicklung induzierte Spannung U2 bestimmt wird,
   wobei bei Bestimmung der in der ersten Teilwicklung induzierten Spannung die zweite Teilwicklung stromlos geschaltet wird, insbesondere also zumindest ein Anschluss der zweiten Teilwicklung elektrisch abgetrennt wird,
   wobei bei Bestimmung der in der zweiten Teilwicklung induzierten Spannung die erste Teilwicklung stromlos geschaltet wird, insbesondere also zumindest ein Anschluss der ersten Teilwicklung elektrisch abgetrennt wird.

Von Vorteil ist dabei, dass eine Entfernungsbestimmung in einfacher Weise ausführbar ist. Denn es muss nur die Beaufschlagung einer Wicklung mit Wechselstrom ausgeführt werden und die in den Teilwicklungen induzierten Spannungen bestimmt werden, so dass die Phasendifferenz der beiden induzierten Spannungsverläufe bestimmbar ist. Dabei bezieht sich die Phasendifferenz auf einen Nulldurchgang zum in der ersten Teilwicklung induzierten Spannungsverlaufs und nimmt Werte zwischen 0° und 360° an. Wenn also die Bestimmung des in der ersten Teilwicklung induzierten Spannungsverlaufs nach beispielswiese zehn Periodendauern beendet ist, wird die Bestimmung des in der zweiten Teilwicklung induzierten Spannungsverlaufs ausgeführt. Die zeitliche Differenz eines Nulldurchgangs der zweiten Bestimmung zu einem Nulldurchgang der ersten Bestimmung wird Modulo der Periodendauer bestimmt, also das größte ganzzahlige Vielfache der Periodendauer abgezogen, so dass ein positiver Rest übrig bleibt, und dieser Rest durch die Periodendauer dividiert und mit 360° multipliziert. Somit ist die Phasendifferenz auch bestimmbar, obwohl die beiden Spannungsverläufe nicht gleichzeitig sondern zeitlich voneinander beabstandet erfasst werden. Die Phasendifferenz ist als Wert für Versatz anzeigbar, so dass ein Fahrer das Fahrzeug derart steuert, dass die der optimalen Position zugeordnete Phasendifferenz , also Null, erreicht wird, oder die Phasendifferenz wird einer Regelvorrichtung zugeführt, welche die Lenkvorrichtung und/oder den Antrieb des Fahrzeugs derart ansteuert, dass die der optimalen Position zugeordnete Phasendifferenz , also Null, erreicht wird.

Bei einer vorteilhaften Ausgestaltung wird aus der bestimmten Phasendifferenz ein Wert für Entfernung der senkrechten Projektionen der Wicklungen in die Ebene bestimmt, insbesondere mittels einer Kennlinie,

insbesondere wobei die Kennlinie die Abhängigkeit der Phasendifferenz von der Entfernung beschreibt. Von Vorteil ist dabei, dass mittels der Kennlinie aus dem erfassten Wert für Phasendifferenz die Entfernung zur optimalen Position in eineindeutiger Weise bestimmbar ist.

Bei einer vorteilhaften Ausgestaltung wird die Kennlinie als Interpolationskurve von in einem Speicher abgelegten Wertepaaren gebildet. Von Vorteil ist dabei, dass Speicherplatz einsparbar ist. Denn es müssen nur wenige Punkte der Kennlinie abgespeichert werden und trotzdem ist der Kurvenverlauf einfach und mit wenig Aufwand abspeicherbar.

Bei einer vorteilhaften Ausgestaltung wird der Antrieb und/oder die Lenkvorrichtung eines Fahrzeugs derart angesteuert, dass die erfasste Entfernung auf Null hin geregelt wird. Von Vorteil ist dabei, dass ein automatisches Einparken auf die optimale Position hin ausführbar ist.

Wichtige Merkmale bei dem System zur Durchführung eines vorgenannten Verfahrens sind, dass die beiden Teilwicklungen jeder Wicklung jeweils als Flachwicklung ausgeführt sind, insbesondere als ebene parallel ausgerichtete Wicklungen. Von Vorteil ist dabei, dass ein möglichst einfaches System zur Beladung eines Elektrofahrzeuges realisierbar ist.

Bei einer vorteilhaften Ausgestaltung sind die Teilwicklungen jeweils als rechteckförmige, kreisförmige oder ellipsenförmige Wicklungen ausgeführt. Von Vorteil ist dabei, dass eine einfache Herstellung ausführbar ist.

Bei einer vorteilhaften Ausgestaltung ist die Erstreckungsrichtung der ersten der beiden Wicklungen parallel zu der Erstreckungsrichtung der zweiten der beiden Wicklungen ausgerichtet. Von Vorteil ist dabei, dass der Versatz vorzugsweise in der Vorzugsrichtung bestimmbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße Wicklung schematisch dargestellt, die auch als Nahfeldkoppler bezeichenbar ist und eine erste und eine zweite Teilwicklung aufweist.

In der Figur 2 ist das erfindungsgemäße System schematisch skizziert.

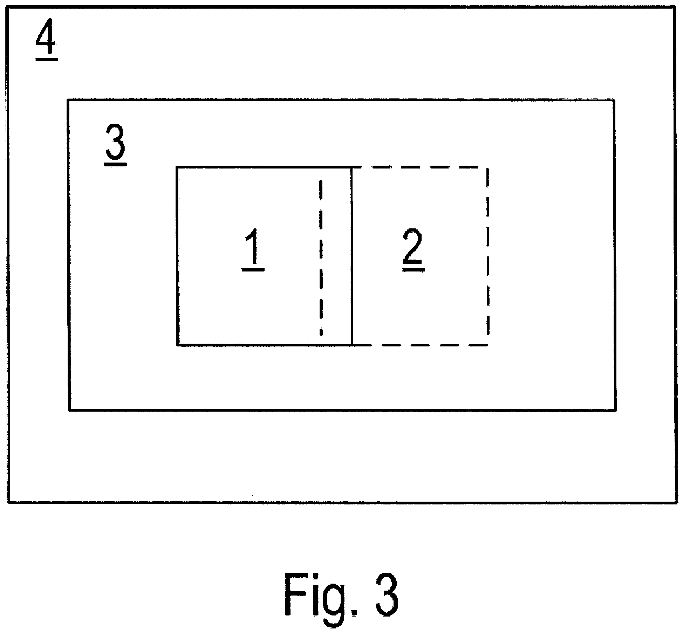

In der Figur 3 ist die schematische Anordnung der Wicklung im System gezeigt.

In der Figur 4 ist eine stationär angeordnete Wicklung und eine an einem Fahrzeug angeordnete ebensolche Wicklung gezeigt, deren senkrechte Projektion in die Verfahrebene des Fahrzeugs nicht überlappen, also noch beabstandet sind.

IN der Figur 5 sind die Anschlusskontakte der Wicklung dargestellt.

In der Figur 6 ist die Abhängigkeit der Phasendifferenz der in der ersten und in der zweiten Teilwicklung jeweils induzierten Spannung vom Versatz, also Abstand der Schwerpunkte der senkrechten Projektionen der stationär angeordneten und der am Fahrzeug angeordneten Wicklung zueinander, dargestellt.

Wie den Figuren gezeigt, weist das Fahrzeug eine Wicklung auf, die aus zwei Teilwicklungen (1, 2) zusammengesetzt ist. Somit ist die Wicklung auch als Wicklung mit Mittelabgriff ausführbar. Dabei sind beide Teilwicklungen (1, 2) als Flachwicklungen ausgeführt und überlappend angeordnet. Die Flachwicklungen sind sozusagen in einer Ebene angeordnet, wenn man die Wicklungsdrahtdicke und ihre Beabstandung vernachlässigt.

Die überlappende Fläche ist dabei derart gewählt, dass bei Bestromung der ersten Teilwicklung 1 mit einem Wechselstrom in der zweiten Teilwicklung 2 keine Spannung induziert wird. Denn in der Wicklungsebene das von der ersten Teilwicklung erzeugte Magnetfeld ist in der von der ersten Teilwicklung 1 umwickelten Fläche, also Wicklungsfläche, umgekehrt gerichtet zu dem außerhalb der ersten Teilwicklung erzeugten Magnetfeld.

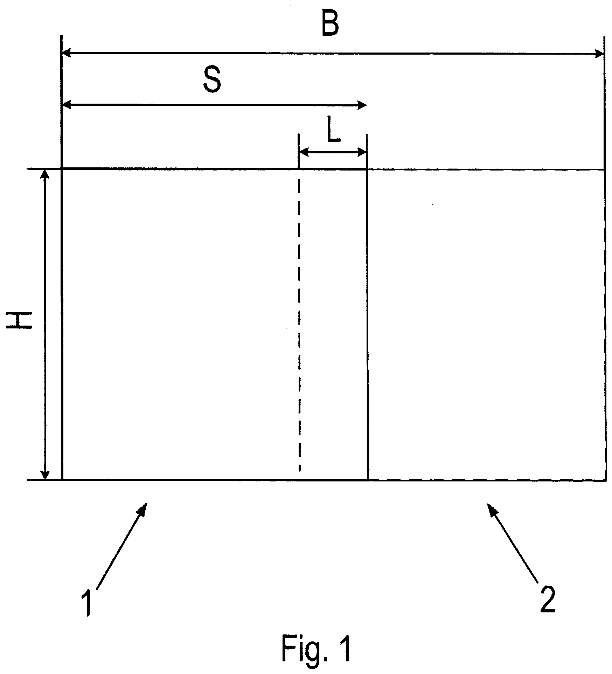

Zwar ist in Figur 1 die Form der Teilwicklungen rechteckig gewählt, jedoch sind hier auch andere Formen, wie beispielsweise Kreisform oder Ellipsenform, vorteilhaft einsetzbar. Fertigungstechnisch begründbare Abweichungen zu den genannten Formen sind ebenfalls zulässig.

Wichtig ist dabei also, dass bei Beaufschlagung der ersten Teilwicklung 1 mit einem Wechselstrom, also bei Anlegen einer Wechselspannung an die Klemmen 50 und 51 der ersten Teilwicklung 1, keine an den Klemmen 52 und 53 erfassbare, induzierte Spannung feststellbar ist. Ebenso ist bei der Beaufschlagung der zweiten Teilwicklung 2 mit einem Wechselstrom keine induzierte Spannung an der ersten Teilwicklung 1 erfassbar ist.

Außerdem ist durch den nicht überlappenden Bereich der ersten Teilwicklung 1, den überlappenden Bereich und durch den nicht überlappenden Beriech der zweiten Teilwicklung 2 eine Richtung ausgezeichnet, die als Ausrichtung oder Erstreckungsrichtung der gesamten Wicklung bezeichenbar ist.

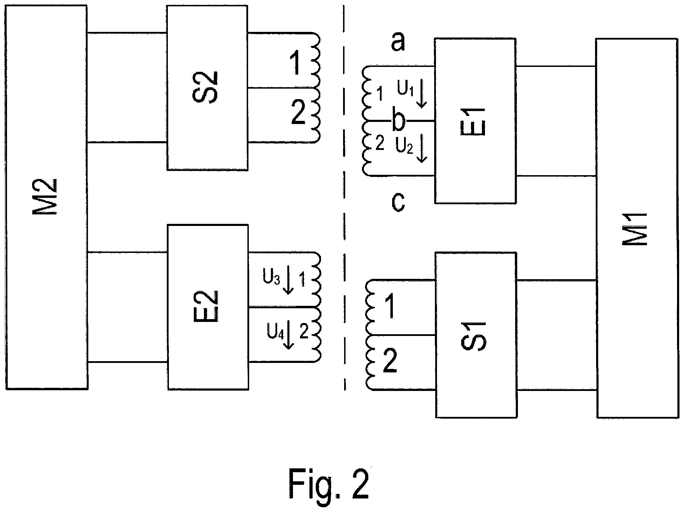

Wie in Figur 2 gezeigt, ist die vorgenannte Wicklung, welche die in der genannten Art überlappenden beiden Teilwicklungen (1, 2) aufweist, mit Erstreckungsrichtung in X-Richtung am Sender S2 des Modems M2 angeordnet. Hierzu ist in Figur 2 die Wicklung als Wicklung mit Teilwicklungen (1, 2) und Mittelabgriff dargestellt. Der Sender dient zur Speisung der Wicklung, insbesondere zum Versorgen der ersten und/oder zweiten Teilwicklung (1, 2) mit Wechselspannung.

Mit dem Modem M2 ist auch ein Empfänger E2 verbunden, der die an der vorgenannten Wicklung induzierten Spannungen, also die an den Teilwicklungen (1, 2) induzierten Spannungen erfasst. Dabei weist allerdings die Erstreckungsrichtung dieser Wicklung einen nichtverschwindenden Winkel gegen die X-Richtung ein, vorzugsweise ist die Erstreckungsrichtung in Y-Richtung, also senkrecht ausgerichtet.

Ebenso ist mit dem ersten Modem M1 ein Sender S1 und ein Empfänger E1 verbunden, wobei die mit dem Empfänger E1 verbundene Wicklung eine Erstreckungsrichtung in X-Richtung aufweist und die mit dem Sender S1 verbundene Wicklung eine Erstreckungsrichtung aufweist, die den nichtverschwindenden Winkel gegen die X-Richtung aufweist, vorzugsweise also in Y-Richtung, also senkrecht zur X-Richtung, ausgerichtet ist. Das Modem M2 mit Sender S2 und Empfänger E2 samt der verbundenen Wicklungen sind stationär angeordnet, insbesondere in oder an der Verfahrebene eines Fahrzeugs.

Das Modem M1 mit Sender S1 und Empfänger E1 samt der verbundenen Wicklungen sind am Fahrzeug angeordnet.

Das Fahrzeug ist in der Verfahrebene verfahrbar. Vorzugsweise ist diese Verfahrebene parallel zu den Wicklungsebenen der Wicklungen ausgeführt.

Das Fahrzeug wird mittels des erfindungsgemäßen Systems auf eine optimale Position hin positionierbar. In dieser Position ist eine möglichst starke Kopplung zwischen einer im Boden verlegten Primärwicklung 3 und einer am Fahrzeug angeordneten Sekundärwicklung 4 erreichbar. Somit ist über diese induktive Kopplung elektrische Leistung übertragbar und ein Energiespeicher des Fahrzeugs, insbesondere Elektrofahrzeugs, beladbar.

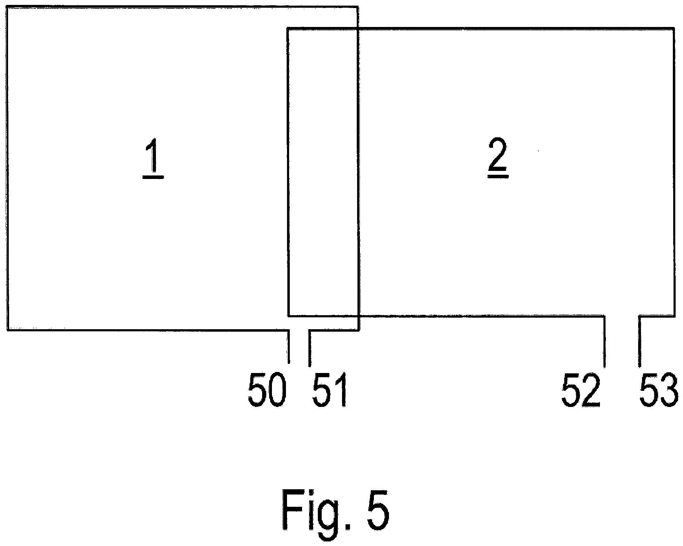

Mittels der in den Figuren 1, 2, 4, 5, 6 dargestellten Anordnung ist nun eine Bestimmung der Entfernung des Fahrzeugs von der optimalen Position ermöglicht:
Hierzu wird die Entfernung in X-Richtung und die Entfernung in Y-Richtung bestimmt.

Zur Bestimmung der Entfernung in X-Richtung werden die Teilwicklungen 1 und 2 der mit dem Sender S2 verbundenen Wicklung mit Wechselstrom beaufschlagt. Zur Erfassung der induzierten Spannung U1 an der ersten Teilwicklung 1 der mit dem Empfänger E1 verbundenen Wicklung wird die zweite Teilwicklung 2 stromlos geschaltet, also die Klemmen 52 und/oder 53 geöffnet. Somit wird die Erfassung der induzierten Spannung U1 nicht gestört durch die zweite Teilwicklung 2.

Danach wird die an der zweiten Teilwicklung 2 induzierte Spannung U2 erfasst, wobei die erste Teilwicklung stromlos geschaltet ist, also die Klemmen 50 und/oder 51 der ersten Teilwicklung 1 geöffnet sind, also nicht elektrisch verbunden sind. Somit stört die erste Teilwicklung 1 die Erfassung der der Spannung U2 nicht.

Aus den erfassten Spannungsverläufen wird die Phasendifferenz der beiden Spannungen U1 und U2 bestimmt. Die Phasendifferenz hängt von dem Versatz der stationären zur am Fahrzeug vorgesehenen Wicklung ab, also von der Entfernung zur optimalen Position.

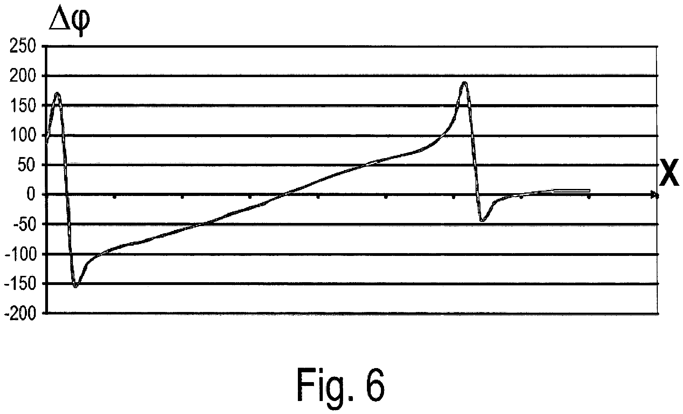

Eine hierfür beispielhafte Abhängigkeit ist in Figur 6 dargestellt, wobei die Abszisse den Versatz in X-Richtung darstellt und die Ordinate die zugehörige Phasendifferenz Δϕ. Der Nulldurchgang entspricht hierbei der optimalen Position. In einem Bereich um den Nulldurchgang herum weist die Abhängigkeit einen eineindeutig umgehbaren Funktionsverlauf auf. Ein solcher Beriech wird im Folgenden als Arbeitsbereich bezeichnet.

Erfindungsgemäß wird nun für den Arbeitsberiech der entsprechend zugehörige Abschnitt der Abhängigkeit nach Figur 6 als Kennlinie in einem Speicher hinterlegt. Somit ist anhand einer gemessenen Phasendifferenz ein Wert für Entfernung zur optimalen Position bestimmbar.

Das Fahrzeug weist eine Steuerung auf, mittels welcher das Fahrzeug zur optimalen Position hin verfahrbar ist, wobei die Steuerung einen Regler aufweist, dem der erfasst Wert an Phasenverschiebung zugeführt wird und der Antrieb des Fahrzeugs derart angesteuert wird, dass der erfasste Wert auf Null hin geregelt wird.

Mittels der im Empfänger E2 erfassten Phasendifferenz der in den Teilwicklungen (1, 2) induzierten Spannungen ist der Abstand von der optimalen Lage zum zugehörigen gleichartig ausgerichteten Sender S1 bestimmbar in analoger Weise.

Somit ist die Regelvorrichtung sogar zweidimensional betreibbar, indem die beiden erfassten Phasendifferenzen einem zweidimensionalen vektoriellen Regler zugeführt werden und nicht nur die Geschwindigkeit des Antriebs in einer Richtung sondern der zweidimensionale Geschwindigkeitsvektor in der Verfahrebene derart als Stellgröße dem in der Verfahrebene zweidimensional wirksamen Antrieb vorgebbar ist, dass das Fahrzeug nicht nur auf die optimale Position hin sondern auch optimal ausgerichtet auf die optimale Position hinregelbar, also hinführbar, ist.

Wie in Figur 1 gezeigt weist die Wicklung eine Breite B in X-Richtung auf die kleiner ist als der zweifache Wert der Spulenbreite S in X-Richtung der ersten Teilwicklung 1 auf. Die Überlappung L ist durch die Differenz der Breite B und der wirklichen Länge in X-Richtung bestimmt.

Daher gilt: B = 2 * S - L

Die Ausdehnung in Y-Richtung ist die Höhe H. Wichtig ist, dass die Breite B größer ist als die Höhe H und somit die Ausdehnung der Wicklung in der Vorzugsrichtung größer ist als in dazu senkrechten Richtung.

Mittels des Modems M1 sind auch Daten übertragbar an das Modem M2, wobei die Modems M1 und M2 mit einer jeweiligen Steuerung verbunden sind. Hierzu werden die Daten vom Modem M1 über den Sender S1 und die mit diesem verbundene Wicklung an die mit dem Empfänger E2 verbundene Wicklung gesendet, also induktiv übertragen, und vom Empfänger E2 an das Modem M2 weitergeleitet. In entsprechender Weise sind auch Daten vom Modem M2 über den Sender S2 und die mit ihm verbunden Wicklung an die mit dem Empfänger E1 verbundene Wicklung und somit vom Empfänger E1 ans Modem M1 übertragbar.

Bei der Bestimmung der in der ersten Teilwicklung induzierten Spannung wird eine Zeitbasis synchronisiert. Vorzugsweise wird der Zeitpunkt eines Nulldurchgangs als Nullpunkt für Zeit verwendet. Wegen der einfach bestimmbaren Periodendauer des Wechselspannungssignal oder der in einem Speicher schon hinterlegten Periodendauer ist die Phasendifferenz des zeitlich später bestimmten, in der zweiten Teilwicklung induzierten Spannungsverlaufs in einfacher Weise bestimmbar.

Die Zeitbasis ist alternativ auch durch einen Synchronisationspuls oder ein anderes Signal übertragbar.

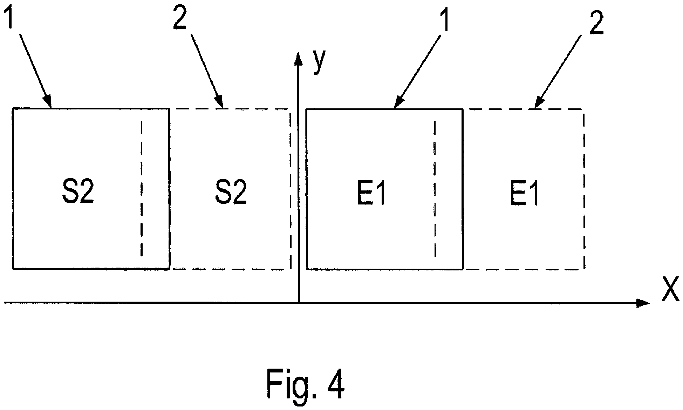

Das erfindungsgemäße System dient der Feinpositionierung. Der Arbeitsbereich hierzu ist somit begrenzt durch die Bedingung, dass die senkrechten Projektionen des Senders und des Empfängers eine nichtleere Schnittmenge aufweisen müssen. Der in Figur 4 gezeigte Versatz ist somit unzulässig hoch, da die dort gezeigte senkrechte Projektion in die Verfahrebene eine leere Schnittmenge zeigt. Denn die Wicklung des Empfängers E1 und die Wicklung des Senders S2 ist in X-Richtung sogar beabstandet.

Somit ist der Arbeitsbereich insgesamt begrenzt durch einen Betrag des Versatzes, welcher der Breite B entspricht, wenn der Empfänger in der Vorzugsrichtung verschoben ist. Dabei darf auch ein Versatz in der zur Vorzugsrichtung senkrechten Richtung vorliegen, wobei dieser Versatz kleiner als die Höhe H bleiben muss. Der Arbeitsberiech erstreckt sich also über eine Länge 2*B in der Vorzugsrichtung, wobei ein Versatzbereich von 2*H in der hierzu senkrechten Richtung zulässig ist.

Gleiches gilt für die um 90° verdrehte Anordnung des Empfängers E2 und des Senders S1.

Somit ist der gesamte Arbeitsbereich des zweidimensional arbeitenden erfindungsgemäßen Systems durch ein Quadrat mit der Kantenlänge H gegeben, dessen Mittelpunkt dem Versatz Null entspricht, also der Positionierung des Fahrzeugs auf der optimalen Position.

### Bezugszeichenliste

1 erste Teilwicklung
2 zweite Teilwicklung
3 Primärspule für Leistungsübertragung
4 Sekundärspule für Leistungsübertragung
50 erster Anschlusskontakt der ersten Teilwicklung 1
51 zweiter Anschlusskontakt der ersten Teilwicklung 1
52 erster Anschlusskontakt der zweiten Teilwicklung 2
53 zweiter Anschlusskontakt der zweiten Teilwicklung 2
B Breite
S Spulenbreite
L Überlappung
H Höhe
M1 erstes Modem
M2 zweites Modem
S1 Sender, der mit dem ersten Modem M1 verbunden ist
S2 Sender, der mit dem zweiten Modem M2 verbunden ist
E1 Empfänger, der mit dem ersten Modem M1 verbunden ist
E2 Empfänger, der mit dem zweiten Modem M2 verbunden ist
U1 in der ersten Teilwicklung 1 induzierte Spannung
U2 in der zweiten Teilwicklung 2 induzierte Spannung
X, Y Koordinaten in der Verfahrebene

## Patentansprüche

1. Verfahren zur Bestimmung eines Wertes für den Versatz der senkrechten Projektionen zweier Wicklungen in eine Ebene, insbesondere die Verfahrebene eines am eine erste der beiden Wicklungen aufweisenden Boden verfahrbaren, eine zweite der beiden Wicklungen aufweisenden Fahrzeugs,
wobei jede der Wicklungen jeweils eine erste und eine zweite Teilwicklung aufweist,
wobei die beiden Teilwicklungen derart überlappend angeordnet sind, dass bei Bestromung der ersten Teilwicklung einer der Wicklungen mit einem Wechselstrom keine induzierte Spannung an der zweiten Teilwicklung derselben Wicklung erfassbar ist,
wobei zur Bestimmung eines Wertes für Entfernung
- eine als Sender fungierende Wicklung mit einem Wechselstrom beaufschlagt wird, insbesondere beide Teilwicklungen der Wicklung mit demselben Wechselstrom beaufschlagt werden,
- die Phasendifferenz zwischen der in der ersten Teilwicklung der als Empfänger fungierenden, anderen Wicklung induzierte Spannung U1 und der in der zweiten Teilwicklung der als Empfänger fungierenden Wicklung induzierte Spannung U2 bestimmt wird,
wobei bei Bestimmung der in der ersten Teilwicklung induzierten Spannung die zweite Teilwicklung stromlos geschaltet wird, insbesondere also zumindest ein Anschluss der zweiten Teilwicklung elektrisch abgetrennt wird,
wobei bei Bestimmung der in der zweiten Teilwicklung induzierten Spannung die erste Teilwicklung stromlos geschaltet wird, insbesondere also zumindest ein Anschluss der ersten Teilwicklung elektrisch abgetrennt wird, **dadurch gekennzeichnet, dass** aus der bestimmten Phasendifferenz ein Wert für die Entfernung der senkrechten Projektionen der Wicklungen in die Ebene mittels einer Kennlinie bestimmt wird,
wobei die Kennlinie die Abhängigkeit der Phasendifferenz von der Entfernung beschreibt.

2. Verfahren nach Anspruch 1,
**dadurch gekennzeichnet, dass**
die Kennlinie als Interpolationskurve von in einem Speicher abgelegten Wertepaaren gebildet wird.

3. Verfahren nach mindestens einem der vorangegangenen Ansprüche,
**dadurch gekennzeichnet, dass**
der Antrieb und/oder die Lenkvorrichtung eines Fahrzeugs derart angesteuert wird oder werden, dass die erfasste Entfernung auf Null hin geregelt wird.

4. System zur Durchführung eines Verfahrens nach einem der vorangegangenen Ansprüche, **dadurch gekennzeichnet, dass**
die beiden Teilwicklungen jeder Wicklung jeweils als Flachwicklung ausgeführt sind, insbesondere als ebene parallel ausgerichtete Wicklungen.

5. System nach Anspruch 4,
**dadurch gekennzeichnet, dass**
die Teilwicklungen jeweils als rechteckförmige, kreisförmige oder ellipsenförmige Wicklungen ausgeführt sind.

6. System nach Anspruch 4 oder 5,
**dadurch gekennzeichnet, dass**
die Erstreckungsrichtung der ersten der beiden Wicklungen parallel zu der Erstreckungsrichtung der zweiten der beiden Wicklungen ausgerichtet ist.

## Claims

1. Method for determining a value for the offset of the perpendicular projections of two windings into a plane, in particular the plane of movement of a vehicle which is movable on the underlying surface having a first of the two windings, the vehicle having a second of the two windings,
wherein each of the windings has, in each case, a first and a second partial winding,
wherein the two partial windings are arranged overlapping in such a way that, when the first partial winding of one of the windings is energized with an alternating current, no induced voltage can be detected on the second partial winding of the same winding,
wherein, in order to determine a value for the distance,
- a winding which functions as a transmitter is supplied with an alternating current, in particular both partial windings of the winding are supplied with the same alternating current,
- the phase difference between the voltage U1 induced in the first partial winding of the other winding which functions as a receiver and the voltage U2 induced in the second partial winding of the winding which functions as a receiver is determined,
wherein, when determining the voltage induced in the first partial winding, the second partial winding is switched to a currentless state, that is to say in particular at least one terminal of the second partial winding is electrically disconnected,
wherein, when determining the voltage induced in the second partial winding, the first partial winding is switched to a currentless state, that is to say in particular at least one terminal of the first partial winding is electrically disconnected,
**characterized in that**
a value for the distance between the perpendicular projections of the windings into the plane is determined from the determined phase difference by means of a characteristic curve,
wherein the characteristic curve describes the dependence of the phase difference on the distance.

2. Method according to claim 1,
**characterized in that**
the characteristic curve is formed as an interpolation curve of value pairs stored in a memory.

3. Method according to at least one of the preceding claims, **characterized in that**
the drive and/or the steering device of a vehicle is or are actuated such that the detected distance is adjusted to zero.

4. System for carrying out a method according to one of the preceding claims,
**characterized in that**
the two partial windings of each winding are configured in each case as a flat winding, in particular as planar windings aligned in parallel.

5. System according to claim 4,
**characterized in that**
the partial windings are configured in each case as rectangular, circular or elliptical windings.

6. System according to claim 4 or 5,
**characterized in that**
the direction of extension of the first of the two windings is aligned in parallel with the direction of extension of the second of the two windings.

## Revendications

1. Procédé de détermination d'une valeur du décalage des projections verticales de deux enroulements dans un plan, en particulier le plan de déplacement d'un véhicule pouvant se déplacer sur un sol présentant un premier des deux enroulements et présentant lui-même un second des deux enroulements,
chacun des enroulements présentant un premier et un second enroulement partiel,
les deux enroulements partiels étant disposés de manière à se chevaucher de telle sorte que, lorsqu'un courant alternatif est appliqué au premier enroulement partiel d'un des enroulements, aucune tension induite ne peut être détectée au second enroulement partiel du même enroulement,
dans lequel, pour déterminer une valeur de distance :
- un enroulement servant d'émetteur est soumis à un courant alternatif, en particulier les deux enroulements partiels de l'enroulement sont soumis au même courant alternatif,
- la différence de phase entre la tension U1 induite dans le premier enroulement partiel de l'autre enroulement servant de récepteur et la tension U2 induite dans le second enroulement partiel de l'enroulement servant de récepteur est déterminée, le second enroulement partiel étant mis hors tension, en particulier au moins une borne du second enroulement partiel étant électriquement déconnectée lors de la détermination de la tension induite dans le premier enroulement partiel,
le premier enroulement partiel étant mis hors tension, en particulier au moins une borne du premier enroulement partiel étant électriquement déconnectée lors de la détermination de la tension induite dans le second enroulement partiel,
**caractérisé en ce qu'**à partir de la différence de phase déterminée, une valeur de la distance des projections verticales des enroulements dans le plan est déterminée au moyen d'une courbe caractéristique,
laquelle courbe caractéristique décrit la dépendance entre la différence de phase et la distance.

2. Procédé selon la revendication 1,
**caractérisé en ce que** la courbe caractéristique est formée comme une courbe d'interpolation de paires de valeurs stockées dans une mémoire.

3. Procédé selon au moins l'une des revendications précédentes,
**caractérisé en ce que** l'entraînement et/ou le dispositif de direction d'un véhicule est ou sont commandé(s) de telle sorte que la distance détectée soit réglée à zéro.

4. Système pour mettre en oeuvre un procédé selon l'une des revendications précédentes, **caractérisé en ce que** les deux enroulements partiels de chaque enroulement sont conçus comme des enroulements plats, en particulier comme des enroulements plats orientés parallèlement.

5. Système selon la revendication 4,
**caractérisé en ce que** les enroulements partiels sont chacun réalisés sous la forme d'enroulements rectangulaires, circulaires ou elliptiques.

6. Système selon la revendication 4 ou 5,
**caractérisé en ce que** la direction d'extension du premier des deux enroulements est orientée parallèlement à la direction d'extension du second des deux enroulements.
